# EUROPEAN PATENT APPLICATION

(11) **EP 4 379 899 A1**
(43) Date of publication of application: **05.06.2024**
(21) Application number: 22849556.0
(22) Date of filing: 27.07.2022
(51) Int. Cl.: H01M 10/18, H01M 4/70, H01M 50/103

(54) **BIPOLAR LEAD BATTERY**

(30) Priority: 28.07.2021 JP 2021123478
(71) Applicant: The Furukawa Battery Co., Ltd., Yokohama-shi, Kanagawa-ken 240-0006 (JP); FURUKAWA ELECTRIC CO., LTD., Tokyo 100-8322 (JP)
(72) Inventor: KOIDE Ayano, Jyoban-shimofunao-machi, Iwaki-shi, Fukushima 972- 8501 (JP); YAMADA Keizo, Jyoban-shimofunao-machi, Iwaki-shi, Fukushima 972- 8501 (JP)
(74) Representative: Grünecker Patent- und Rechtsanwälte PartG mbB
(86) International application number: PCT/JP2022/029008
(87) International publication number: WO 2023/008495

(57) **Abstract**

In a bipolar lead-acid storage battery including a main substrate in which a plurality of cell members are individually accommodated in a plurality of spaces, a positive electrode current collector plate is disposed on one surface of the main substrate, and a negative electrode current collector plate is disposed on the other surface of the main substrate as a substrate constituting a space forming member, the corrosion of the thin-formed positive electrode current collector plate is prevented to extend a life of the bipolar lead-acid storage battery. A thickness (T1) of a positive electrode current collector plate (111a) disposed on one surface of a main substrate (121), which is a substrate (121) disposed between adjacent cell members (110), ranges from 0.15 mm to 0.75 mm. A ratio (T1/T2) of the thickness (T1) of the positive electrode current collector plate (111a) relative to the thickness (T2) of a negative electrode current collector plate (112a) disposed on another face of the main substrate (121) ranges from 1.5 to 6.5.

## Description

### Technical Field

The present invention relates to a bipolar lead-acid storage battery.

### Background Art

In recent years, power generation facilities using natural energy such as sunlight and wind power have increased. In such power generation facilities, since an amount of power generation cannot be controlled, the power load is leveled by u~sing a lead-acid storage battery. That is, when the amount of power generation is larger than a consumption, a difference is charged into the lead-acid storage battery, and when the amount of power generation is smaller than a consumption, a difference is discharged from the lead-acid storage battery. As the lead-acid storage battery described above, a lead-acid storage battery is frequently used from a viewpoint of economic efficiency, safety, and the like. As such a conventional lead-acid storage battery, for example, a bipolar lead-acid storage battery described in PTL 1 is known.

The bipolar lead-acid storage battery has a frame shape and has a resin substrate attached to the inside of a resin frame. Lead layers are disposed on both surfaces of the substrate. A positive active material layer is adjacent to the lead layer formed on one surface of the substrate, and a negative active material layer is adjacent to the lead layer formed on the other surface of the substrate. In addition, a resin spacer having a frame shape is provided, and a glass mat impregnated with an electrolytic solution is provided inside the spacer. Then, a plurality of frames and spacers are alternately stacked, and the frames and the spacers are bonded to each other with an adhesive or the like.

In addition, the lead layers on both surfaces of the substrate are connected via a through hole provided in the substrate. Paragraph number [0028] of PTL 1 describes that this connection is performed by, for example, resistance welding.

That is, the bipolar lead-acid storage battery described in PTL 1 includes a plurality of cell members and a plurality of space forming members forming a plurality of spaces individually accommodating the plurality of cell members. Each of the plurality of cell members includes: a positive electrode in which a positive active material layer is disposed on one surface of a positive electrode current collector plate formed of lead or a lead alloy; a negative electrode in which a negative active material layer is disposed on one surface of a negative electrode current collector plate formed of lead or a lead alloy; and a separator (glass mat) interposed between the positive electrode and the negative electrode, and the cell members are disposed in a stack manner with an interval.

In addition, the space forming member includes a substrate that covers at least one of a side of the positive electrode and a side of the negative electrode of the cell member, and a frame body (a frame portion and a spacer of a bipolar plate and an end plate) that surrounds a side surface of the cell member. Furthermore, the cell member and the substrate of the space forming member are disposed to be alternately stacked, the substrate disposed between the cell members adjacent to each other has a through hole extending in a direction intersecting with a plate surface, the positive electrode current collector plate and the negative electrode current collector plate of the cell members adjacent to each other are electrically connected to each other in the through hole, the plurality of cell members are electrically connected in series, and the frame bodies adjacent to each other are joined to each other.

### Citation List

### Patent Literature

PTL 1: JP 6124894 B2

### Summary of Invention

### Technical Problem

One of the causes of deterioration of a lead-acid storage battery is corrosion of a positive electrode current collector plate. As the battery use period becomes longer, corrosion of the positive electrode current collector plate progresses, and when the corrosion progresses, a positive active material cannot be held, and the performance as a battery is deteriorated. In addition, in a case where a positive electrode material (positive electrode current collector plate or positive active material) falling off due to corrosion comes into contact with a negative electrode, a short circuit may occur.

In particular, in a case of the bipolar lead-acid storage battery having the above structure, since a current distribution is a reaction on the surface, there is no need to consider a charge transfer resistance, and it is possible to thin the current collector plate. However, since a distance between the positive electrode and the negative electrode is short, a fatal defect may occur when the degree of corrosion of the thin-formed positive electrode current collector plate increases.

An object of the present invention is to prevent corrosion of, and to extend the life of, a thin-formed positive electrode current collector plate in a bipolar lead-acid storage battery including a plurality of cell members individually housed in multiple spaces, and including a main substrate serving as a substrate constituting a space forming member, the main substrate having one face on which the positive electrode current collector plate is disposed, and another face on which a negative electrode current collector plate is disposed.

### Solution to Problem

In order to solve the problems described above, one aspect of the present invention is a bipolar lead-acid storage battery having the following configurations (1) to (4).
(1) A bipolar lead-acid storage battery includes: a plurality of cell members disposed in a stack manner with intervals including a positive electrode in which a positive active material layer is disposed on one surface of a positive electrode current collector plate formed of lead or a lead alloy, a negative electrode in which a negative active material layer is disposed on one surface of a negative electrode current collector plate formed of lead or a lead alloy, and a separator interposed between the positive electrode and the negative electrode; and a plurality of space forming members that each form a plurality of spaces to individually house the plurality of cell members.
(2) The space forming members each include a substrate formed of a synthetic resin that covers both a side of the positive electrode and a side of the negative electrode of the cell member, and a frame body that surrounds a side surface of the cell member. The cell member and the substrate of the space forming member are disposed to be alternately stacked. The frame bodies adjacent to each other are joined to each other.
(3) A main substrate that is the substrate disposed between the cell members adjacent to each other has a through hole extending in a direction intersecting with a plate surface, and the positive electrode current collector plate and the negative electrode current collector plate of the cell members adjacent to each other are electrically connected to each other by an electrical conductor disposed in the through hole, and the plurality of cell members are electrically connected in series.
(4) A thickness (T1) of the positive electrode current collector plate disposed on one surface of the main substrate ranges from 0.15 mm to 0.75 mm. A ratio (T1/T2) of the thickness (T1) of the positive electrode current collector plate relative to the thickness (T2) of the negative electrode current collector plate disposed on another face of the main substrate ranges from 1.5 to 6.5.

### Advantageous Effects of Invention

The bipolar lead-acid storage battery of the present invention is a bipolar lead-acid storage battery including a main substrate in which a plurality of cell members are individually accommodated in a plurality of spaces with a positive electrode current collector plate disposed on one surface and with a negative electrode current collector plate disposed on the other surface, as a substrate constituting a space forming member, and it can be expected that corrosion of a thin-formed positive electrode current collector plate is prevented and its life is extended.

### Brief Description of Drawings

FIG. 1 is a cross-sectional view illustrating a schematic configuration of a bipolar lead-acid storage battery according to an embodiment of the present invention; and
FIG. 2 is a partially enlarged view of the bipolar lead-acid storage battery of FIG. 1.

### Description of Embodiments

Hereinafter, embodiments of the present invention will be described, but the present invention is not limited to the following embodiments. In the embodiments described below, technically preferable limitations are made to implement the present invention, but this limitation is not an essential requirement of the present invention.

### [Overall Configuration]

First, an overall configuration of a bipolar lead-acid storage battery of the embodiment will be described.

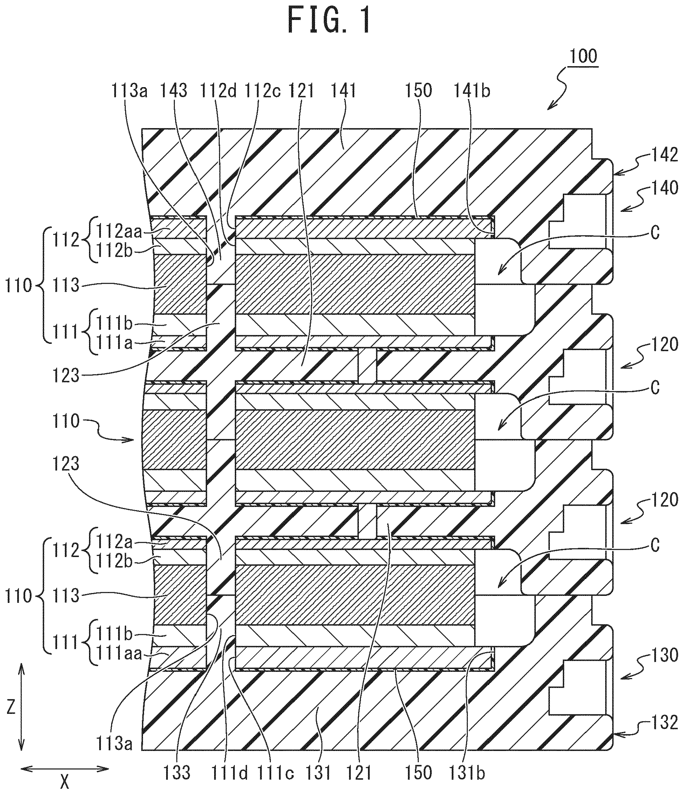

As illustrated in FIG. 1, a bipolar lead-acid storage battery 100 of the embodiment includes a plurality of cell members 110, a plurality of biplates (space forming members) 120, a first end plate (space forming member) 130, and a second end plate (space forming member) 140. FIG. 1 illustrates the bipolar lead-acid storage battery 100 in which three cell members 110 are stacked, but the number of cell members 110 is determined depending on battery design. In addition, the number of the biplates 120 is determined depending on the number of the cell members 110.

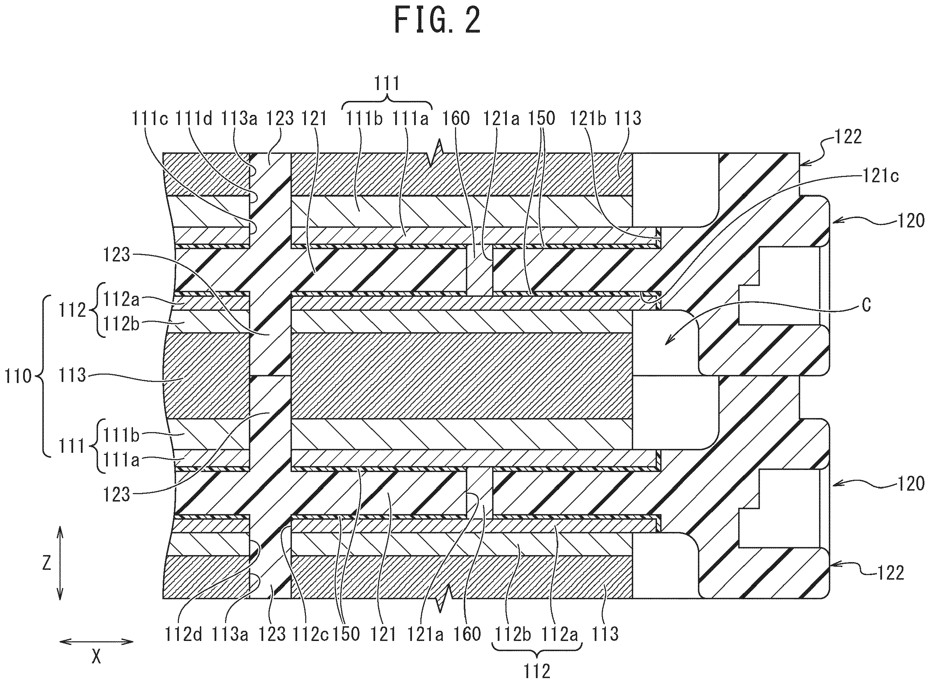

A stacking direction of the cell members 110 is defined as a Z direction (vertical direction in FIGS. 1 and 2), and a direction perpendicular to the Z direction is defined as an X direction.

The cell member 110 includes a positive electrode 111, a negative electrode 112, and a separator (electrolyte layer) 113. The separator 113 is impregnated with an electrolytic solution. The positive electrode 111 includes positive electrode current collector plates 111a and 111aa and a positive active material layer 111b. The negative electrode 112 includes negative electrode current collector plates 112a and 112aa and a negative active material layer 112b. The separator 113 is interposed between the positive electrode 111 and the negative electrode 112. In the cell member 110, the positive electrode current collector plates 111a and 111aa, the positive active material layer 111b, the separator 113, the negative active material layer 112b, and the negative electrode current collector plates 112a and 112aa are stacked in this order.

A dimension (thickness) in the Z direction of the positive electrode current collector plate 111a is larger (thicker) than that of the negative electrode current collector plate 112a, and a dimension in the Z direction of the positive active material layer 111b is larger (thicker) than that of the negative active material layer 112b.

The plurality of cell members 110 are disposed in a stack manner with intervals in the Z direction, and a substrate 121 of the biplate 120 is disposed at the interval. That is, the plurality of cell members 110 are stacked with the substrate 121 of the biplate 120 interposed.

The plurality of biplates 120, the first end plate 130, and the second end plate 140 are members for forming a plurality of spaces (cells) C for individually housing the plurality of cell members 110.

As illustrated in FIG. 2, the biplate 120 includes the substrate 121 having a rectangular planar shape, a frame body 122 covering four end surfaces of the substrate 121, and a column portion 123 vertically protruding from both surfaces of the substrate 121, and the substrate 121, the frame body 122, and the column portion 123 are integrally formed of a synthetic resin. Note that the number of column portions 123 protruding from each surface of the substrate 121 may be one or plural.

In the Z direction, a dimension of the frame body 122 is larger than a dimension (thickness) of the substrate 121, and a dimension between protruding end surfaces of the column portion 123 is the same as the dimension of the frame body 122. Then, a space C is formed between the substrate 121 and the substrate 121 by stacking the plurality of biplates 120 in contact with the frame body 122 and the column portions 123, and a dimension of the space C in the Z direction is maintained by the column portions 123 that are in contact with each other.

Through holes 111c, 111d, 112c, 112d, and 113a penetrating the column portion 123 are formed in the positive electrode current collector plates 111a and 111aa, the positive active material layer 111b, the negative electrode current collector plates 112a and 112aa, the negative active material layer 112b, and the separator 113, respectively.

The substrate 121 of the biplate 120 has a plurality of through holes 121a penetrating the plate surface. A first recess 121b is formed on one surface of the substrate 121, and a second recess 121c is formed on the other surface of the substrate 121. A depth of the first recess 121b is deeper than that of the second recess 121c. Dimensions of the first recess 121b and the second recess 121c in the X direction and the Y direction correspond to the dimensions of the positive electrode current collector plate 111a and the negative electrode current collector plate 112a in the X direction and the Y direction.

The substrate 121 of the biplate 120 is disposed between the cell members 110 adjacent to each other in the Z direction. The substrate 121 of the biplate 120 is a substrate that covers both a side of the positive electrode 111 of the cell member 110 and a side of the negative electrode 112 of the cell member 110 adjacent thereto. The positive electrode current collector plate 111a of the cell member 110 is disposed in the first recess 121b of the substrate 121 of the biplate 120 with an adhesive layer 150 interposed therebetween. That is, the positive electrode current collector plate 111a is fixed to the surface of the substrate 121 close to the positive electrode 111 (a bottom surface of the first recess 121b) with an adhesive.

In addition, the negative electrode current collector plate 112a of the cell member 110 is disposed in the second recess 121c of the substrate 121 of the biplate 120 with the adhesive layer 150 interposed. That is, the negative electrode current collector plate 112a is fixed to the surface of the substrate 121 close to the negative electrode 112 (a bottom surface of the second recess 121c) with an adhesive.

An electrical conductor 160 is disposed in the through hole 121a of the substrate 121 of the biplate 120, and both end surfaces of the electrical conductor 160 are in contact with and coupled to the positive electrode current collector plate 111a and the negative electrode current collector plate 112a. That is, the positive electrode current collector plate 111a and the negative electrode current collector plate 112a are electrically connected by the electrical conductor 160. As a result, all of the plurality of cell members 110 are electrically connected in series.

As illustrated in FIG. 1, the first end plate 130 includes a substrate 131 that covers a side of the positive electrode of the cell member 110, a frame body 132 that surrounds the side surface of the cell member 110, and a column portion 133 that vertically protrudes from one surface of the substrate 131 (a surface of the biplate 120 disposed closest to the side of the positive electrode, the surface facing the substrate 121). A planar shape of the substrate 131 is rectangular, and four end surfaces of the substrate 131 are covered with the frame body 132, and the substrate 131, the frame body 132, and the column portion 133 are integrally formed of a synthetic resin. Note that the number of column portions 133 protruding from one surface of the substrate 131 may be one or plural, but corresponds to that of the column portions 123 of the biplate 120 to be brought into contact with the column portion 133.

In the Z direction, a dimension of the frame body 132 is larger than a dimension (thickness) of the substrate 131, and a dimension between protruding end surfaces of the column portion 133 is the same as the dimension of the frame body 132. Then, a space C is formed between the substrate 121 of the biplate 120 and the substrate 131 of the first end plate 130 by stacking the frame body 132 and the column portion 133 in contact with the frame body 122 and the column portion 123 of the biplate 120 disposed on an outermost side (positive electrode side), and a dimension of the space C in the Z direction is maintained by the column portion 123 of the biplate 120 and the column portion 133 of the first end plate 130, which are in contact with each other.

Through holes 111c, 111d, and 113a penetrating the column portion 133 are formed in the positive electrode current collector plate 111aa, the positive active material layer 111b, and the separator 113 of the cell member 110 disposed on the outermost side (positive electrode side), respectively.

A recess 131b is formed on one surface of the substrate 131 of the first end plate 130. A dimension of the recess 131b in the X direction corresponds to a dimension of the positive electrode current collector plate 111aa in the X direction. A dimension of the positive electrode current collector plate 111aa disposed on one surface of the substrate 131 of the first end plate 130 in the Z direction is larger than a dimension of the positive electrode current collector plate 111a disposed on one surface of the substrate 121 of the biplate 120 in the Z direction.

The positive electrode current collector plate 111aa of the cell member 110 is disposed in the recess 131b of the substrate 131 of the first end plate 130 with the adhesive layer 150 interposed. That is, the positive electrode current collector plate 111aa is fixed to the surface of the substrate 131 close to the positive electrode 111 (a bottom surface of the recess 131b) with an adhesive.

In addition, the first end plate 130 includes a positive electrode terminal electrically connected to the positive electrode current collector plate 111aa in the recess 131b.

The second end plate 140 includes a substrate 141 that covers the negative electrode of the cell member 110, a frame body 142 that surrounds the side surface of the cell member 110, and a column portion 143 that vertically protrudes from one surface of the substrate 141 (a surface facing the substrate 121 of the biplate 120 disposed closest to the negative electrode). A planar shape of the substrate 141 is rectangular, four end surfaces of the substrate 141 are covered with the frame body 142, and the substrate 141, the frame body 142, and the column portion 143 are integrally formed of a synthetic resin. Note that the number of column portions 143 protruding from one surface of the substrate 141 may be one or plural, but corresponds to the number of the column portions 123 of the biplate 120 to be brought into contact with the column portion 143.

In the Z direction, a dimension of the frame body 142 is larger than a dimension (thickness) of the substrate 131, and a dimension between two protruding end surfaces of the column portion 143 is the same as the dimension of the frame body 142. Then, a space C is formed between the substrate 121 of the biplate 120 and the substrate 141 of the second end plate 140 by stacking the frame body 142 and the column portion 143 in contact with the frame body 122 and the column portion 123 of the biplate 120 disposed on an outermost side (negative electrode side), and a dimension of the space C in the Z direction is maintained by the column portion 123 of the biplate 120 and the column portion 143 of the second end plate 140, which are in contact with each other.

Through holes 112c, 112d, and 113a penetrating the column portion 143 are formed in the negative electrode current collector plate 112aa, the negative active material layer 112b, and the separator 113 of the cell member 110 disposed on the outermost side (negative electrode side), respectively.

A recess 141b is formed on one surface of the substrate 141 of the second end plate 140. A dimension of the recess 141b in the X direction and the Y direction corresponds to a dimension of the negative electrode current collector plate 112aa in the X direction and the Y direction. A dimension of the negative electrode current collector plate 112aa disposed on one surface of the substrate 141 of the second end plate 140 in the Z direction is larger than a dimension of the negative electrode current collector plate 112a disposed on the other surface of the substrate 121 of the biplate 120 in the Z direction.

The negative electrode current collector plate 112aa of the cell member 110 is disposed in the recess 141b of the substrate 141 of the second end plate 140 with the adhesive layer 150 interposed. That is, the negative electrode current collector plate 112aa is fixed to the surface of the substrate 141 close to the negative electrode 112 (a bottom surface of the recess 141b) with an adhesive.

In addition, the second end plate 140 includes a negative electrode terminal electrically connected to the negative electrode current collector plate 112aa in the recess 141b.

Note that, as can be seen from the above description, the biplate 120 is a space forming member including the substrate 121 that covers both a side of the positive electrode and a side of the negative electrode of the cell member 110 and the frame body 122 that surrounds the side surface of the cell member 110. The first end plate 130 is a space forming member including the substrate 131 that covers only a side of the positive electrode (one of a side of the positive electrode and a side of the negative electrode) of the cell member 110 and the frame body 132 that surrounds the side surface of the cell member 110.

In addition, the second end plate 140 is a space forming member including the substrate 141 that covers only a side of the negative electrode (one of a side of the positive electrode and a side of the negative electrode) of the cell member 110 and the frame body 142 that surrounds the side surface of the cell member 110. That is, each of the substrates 121, 131, and 141 is a substrate that covers at least one of a side of the positive electrode and a side of the negative electrode of the cell member 110, and the substrate 121 is a substrate that covers both the side of the positive electrode and the side of the negative electrode of the cell member 110. In addition, the substrate 121 of the biplate 120 is a substrate disposed between the cell members 110.

### [Configuration of Current Collector Plate]

A thickness (T1) of the positive electrode current collector plate 111a disposed in recess 121b of the biplate 120 (disposed on one surface of the main substrate 121) is 0.15 mm or more and 0.75 mm or less. In addition, the positive electrode current collector plate 111a is formed of a heat treatment material of a rolled sheet made of a lead alloy in which a content of tin (Sn) is 0.30% by mass or more and 2.1% by mass or less, a content of calcium (Ca) is 0.009% by mass or more and 0.11% by mass or less, and the rest is lead (Pb) and unavoidable impurities.

The positive electrode current collector plate 111aa disposed in the recess 131b of the first end plate 130 has a thickness of, for example, 0.5 mm or more and 1.5 mm or less, and is formed of the same heat treatment material as the positive electrode current collector plate 111a.

A ratio (T1/T2) of a thickness (T1) of the positive electrode current collector plate 111a to a thickness (T2) of the negative electrode current collector plate 112a (disposed on the other surface of main substrate 121) disposed in the recess 121c of the biplate 120 is 1.5 or more and 6.5 or less. That is, a thickness (T2) of the negative electrode current collector plate 112a is set such that the ratio (T1/T2) ranges from 1.5 to 6.5 depending on a thickness (T1) of the positive electrode current collector plate 111a. In addition, the negative electrode current collector plate 112a is made of the same heat treatment material as the positive electrode current collector plate 111a.

The negative electrode current collector plate 112aa disposed in the recess 141b of the second end plate 140 has a thickness of, for example, 0.5 mm or more and 1.5 mm or less, and is formed of the same heat treatment material as the positive electrode current collector plate 111a.

Examples of the lead alloy forming the positive electrode current collector plates 111a and 111aa and the negative electrode current collector plates 112a and 112aa include PbCaSn alloy, PbAgSn alloy, PbSn alloy, and PbCuSn alloy. When PbAgSn is used, a content of Ag is preferably 0.01% by mass or more and 0.05% by mass or less, and a content of Sn is preferably 0.30% by mass or more and 2.1% by mass or less.

### [Action and Effect]

In the bipolar lead-acid storage battery 100 of the embodiment, a thickness (T1) of the positive electrode current collector plate 111a disposed on one surface of the main substrate 121 is as small as 0.15 mm or more and 0.75 mm or less, but since a ratio (T1/T2) to the thickness of the negative electrode current collector plate 112a is 1.5 or more, a reduction in lifetime associated with corrosion of the positive electrode current collector plate is suppressed as compared with a case where the ratio is less than 1.5. That is, in the cell member 110 having the same dimension in the Z direction, by setting a thickness of the positive electrode current collector plate in which corrosion and wear occurs due to charging and discharging to 1.5 or more of the thickness of the negative electrode current collector plate in which corrosion and wear hardly occurs, a battery life can be extended as compared with a case where the thickness is the same as the negative electrode current collector plate.

Furthermore, in a case of adopting a method of connecting positive electrode current collector plate 111a disposed on one surface of the main substrate 121 and the negative electrode current collector plate 112a disposed on the other surface by a welding method such as resistance welding or ultrasonic welding in a state where the electrical conductor 160 is put in the through hole 121a of main substrate 121, when a difference in thickness between the positive electrode current collector plate 111a and the negative electrode current collector plate 112a is large, a difference in heat capacity of metal becomes large, which fails to maintain a balance of heat generated during welding, causing a welding defect. In the bipolar lead-acid storage battery 100 of the embodiment, a ratio of the thicknesses (T1/T2) of the positive electrode current collector plate 111a and the negative electrode current collector plate 112a is 6.5 or less, which suppresses welding defects.

Note that since a plate-shaped material made of lead or a lead alloy has low hardness, a thickness of the positive electrode current collector plate 111a and the negative electrode current collector plate 112a made of lead or a lead alloy is preferably 0.05 mm or more in consideration of handleability at the time of manufacture. In addition, since the thickness of the negative electrode current collector plate 112a is generally hardly corroded by charging and discharging, the thickness is preferably 0.25 mm or less from the viewpoint of cost, weight, and dimension of the cell member 110 in the Z direction.

Corrosion of the positive electrode current collector plate 111a made of lead or a lead alloy starts from a stage at the time of manufacturing a battery (during formation), and thus a thickness of the positive electrode current collector plate 111a is set to 0.15 mm or more in consideration of the corrosion amount. The thickness of positive electrode current collector plate 111a is preferably not too thick from the viewpoint of cost, weight, and dimension of cell member 110 in the Z direction. However, since the life becomes longer as the thickness is thicker, the thickness is set within a range satisfying ratio (T1/T2) depending on necessary life performance.

### Examples

### [Preparation of Positive Electrode Current Collector Plate and Negative Electrode Current Collector Plate] <Sample Nos. 1-1 to 1-10>

A rolled sheet formed of a lead alloy in which a content ratio of tin (Sn) was 1.1% by mass, a content of calcium (Ca) was 0.02% by mass, and the rest was lead (Pb) and unavoidable impurities and having a thickness of 0.1 mm to 0.75 mm was cut into square sheets having a side of 28 cm, thus obtaining positive electrode current collector plates 111a for a biplate 120 of sample Nos. 1-1 to 1-10. A thickness of the positive electrode current collector plate 111a of each sample has a value shown in Table 1 below.

In addition, a rolled sheet containing the same lead alloy as above and having a thickness of 1.50 mm was cut into square sheets having a side of 28 cm, thus obtaining positive electrode current collector plates 111aa for a first end plate 130 of sample Nos. 1-1 to 1-10.

A rolled sheet formed of a lead alloy in which a content ratio of tin (Sn) was 1.1% by mass, a content ratio of calcium (Ca) was 0.02% by mass, and the rest was lead (Pb) and unavoidable impurities and having a thickness of 0.1 mm to 0.25 mm was cut into square sheets having a side of 28 cm, thus obtaining negative electrode current collector plates 112a for a biplate 120 of sample Nos. 1-1 to 1-10. A thickness of the negative electrode current collector plate 112a of each sample has a value shown in Table 1 below.

In addition, a rolled sheet formed of the same lead alloy as above and having a thickness of 1.50 mm was cut into square sheets having a side of 28 cm, thus obtaining negative electrode current collector plates 112aa for a second end plate 140 of sample Nos. 1-1 to 1-10.

### <Sample Nos. 2-1 to 2-7>

A rolled sheet formed of a lead alloy in which a content ratio of tin (Sn) was 1.1% by mass, a content ratio of silver (Ag) was 0.04% by mass, and the rest was lead (Pb) and unavoidable impurities and having a thickness of 0.1 mm to 0.70 mm was cut into square sheets having a side of 28 cm, thus obtaining positive electrode current collector plates 111a for a biplate 120 of sample Nos. 2-1 to 2-7. A thickness of the positive electrode current collector plate 111a of each sample has a value shown in Table 2 below.

In addition, a rolled sheet containing the same lead alloy as above and having a thickness of 1.50 mm was cut into square sheets having a side of 28 cm, and thus obtaining positive electrode current collector plates 111aa for a first end plate 130 of sample Nos. 2-1 to 2-7.

A rolled sheet formed of a lead alloy in which a content ratio of tin (Sn) was 1.1% by mass, a content ratio of silver (Ag) was 0.04% by mass, and the rest was lead (Pb) and unavoidable impurities and having a thickness of 0.10 mm was cut into square sheets having a side of 28 cm, thus obtaining negative electrode current collector plates 112a for a biplate 120 of sample Nos. 2-1 to 2-7.

In addition, a rolled sheet formed of the same lead alloy and having a thickness of 1.50 mm was cut into square sheets having a side of 28 cm, and the square sheets were used as negative electrode current collector plates 112aa for a second end plate 140 of sample Nos. 2-1 to 2-7.

### [Preparation of Biplate]

A biplate 120 having a shape illustrated in FIG. 1 was prepared by injection molding of an ABS resin. A thickness of the substrate 121 of the biplate 120 was 2 mm. A bottom surface of a recess 121b was a square having a side of 28.5 cm, and its depth was 0.32 mm. A bottom surface of a recess 121c was a square having a side of 28.5 cm, and its depth was 0.12 mm.

### [Preparation of End Plate]

A first end plate 130 and a second end plate 140 having shapes illustrated in FIG. 1 were prepared by injection molding of an ABS resin. A thickness of each of a substrate 131 of the first end plate 130 and 141 of the second end plate 140 was 10 mm. A bottom surface of each of a recess 131b and a recess 141b was a square having a side of 28.5 cm and a depth of 1.52 mm.

### [Assembly of Bipolar Lead-Acid Storage Batteries]

Bipolar lead-acid storage batteries of No. 1-1 to No. 1-10 having a structure illustrated in FIG. 1 and a rated capacity of 45 Ah were assembled by the same method except that the positive electrode current collector plate 111a and the negative electrode current collector plate 112a for the biplate 120 were combined as shown in Table 1.

Furthermore, bipolar lead-acid storage batteries of No. 2-1 to No. 2-7 having a structure illustrated in FIG. 1 and a rated capacity of 45 Ah were assembled by the same method except that the positive electrode current collector plate 111a and the negative electrode current collector plate 112a for the biplate 120 were combined as shown in Table 2.

Note that the bipolar lead-acid storage batteries each used the positive active material layer 111b and the negative active material layer 112b formed of a lead compound, and the separator 113 formed of a glass fiber, and each having a thickness corresponding to a rated capacity of 45 Ah.

### [Life Test]

First, each of the bipolar lead-acid storage batteries of Nos. 1-1 to 1-10 and Nos. 2-1 to 2-7 was placed in a water tank in which a water temperature was controlled to 25°C ± 2°C, the bipolar lead acid storage battery was discharged at a 10-hour rate current (4.5 A) of a rated capacity (45 Ah) until a terminal voltage of the battery dropped to 1.8 V/cell, a discharge duration was recorded, and a 10-hour rate capacity was calculated from the discharge current and the discharge duration.

Next, after each bipolar lead-acid storage battery was fully charged, the following (1) was repeated 400 times while constantly measuring the terminal voltage.
(1) The battery is discharged at a 10-hour rate current (4.5 A) of a rated capacity (45 Ah) for 7 hours. That is, the battery is discharged at 70% DOD of the rated capacity.

Each battery after the above discharge was repeated 400 times was disassembled to examine whether penetration occurred in the positive electrode current collector plate 111a and whether a liquid junction occurred. When a liquid junction occurs, a terminal voltage rapidly drops.

Whether penetration occurred was examined by observing a cross section perpendicular to the plate surface of the positive electrode current collector plate 111a and parallel to a rolling direction with an electron microscope (magnification: 400 times).

Whether a liquid junction occurred was examined by checking whether or not the adhesive layer 150 at a peripheral edge portion of a coupling portion of the positive electrode current collector plate 111a with the electrical conductor 160 was discolored by sulfuric acid.

The life performance was evaluated as "⊙" when both the penetration and the liquid junction did not occur at all in the positive electrode current collector plate 111a, "o" when the liquid junction did not occur but there was a portion where the penetration occurred, and "×" when the liquid junction was multiplied.

### [Welding Performance Test]

Each of the lead alloy rolled sheets used in the positive electrode current collector plates 111a and the negative electrode current collector plate 112a for the biplate 120 of each of the bipolar lead-acid storage batteries of No. 1-1 to No. 1-10 and No. 2-1 to No. 2-7 was cut into a square having a side of 30 cm, thus obtaining a positive electrode test plate and a negative electrode test plate for the welding performance test. In addition, as the electrical conductor 160, a cylindrical body made of pure lead and having a diameter of 15 mm and a height of 1.0 mm was prepared. Note that the electrical conductor 160 is not limited to pure lead, and may be made of any conductive material, for example, a lead alloy.

Resistance welding was performed by sandwiching the cylindrical body between the positive electrode test plate and the negative electrode test plate, and the state after welding was examined.

The welding performance was evaluated as "⊙" in a case where welding could be performed without generation of both dust and breakage, "o" in a case where welding could be performed without generation of breakage, but dust was generated, and "×" in a case where welding could not be performed or breakage occurred.

These results are shown in Tables 1 and 2 together with the thickness (T1, T2) and the ratio (T1/T2) of the current collector plate.

**[Table 1]**

| | Thickness and ratio of current collector bodies | | | Evaluation | | |
|---|---|---|---|---|---|---|
| | Positive electrode (T1) | Negative electrode (T2) | T1/T2 | Welding performance | Life | Comprehensive |
| No. | (mm) | (mm) | | | | |
| 1-1 | 0.10 | 0.10 | 1.0 | ⊚ | × | × |
| 1-2 | 0.15 | 0.10 | 1.5 | ⊚ | ○ | ○ |
| 1-3 | 0. 25 | 0.10 | 2.5 | ⊚ | ⊚ | ⊚ |
| 1-4 | 0. 30 | 0.10 | 3.0 | ⊚ | ⊚ | ⊚ |
| 1-5 | 0. 50 | 0.10 | 5.0 | ⊚ | ⊚ | ⊚ |
| 1-6 | 0. 65 | 0.10 | 6.5 | ○ | ⊚ | ○ |
| 1-7 | 0.70 | 0.10 | 7.0 | × | ⊚ | × |
| 1-8 | 0. 45 | 0.15 | 3.0 | ⊚ | ⊚ | ⊚ |
| 1-9 | 0.60 | 0.20 | 3.0 | ⊚ | ⊚ | ⊚ |
| 1-10 | 0.75 | 0. 25 | 3.0 | ⊚ | ⊚ | ⊚ |

**[Table 2]**

| | Thickness of current col lector bodies | | | Evaluation | | |
|---|---|---|---|---|---|---|
| | Positive electrode (T1) | Negative electrode(T2) | T1/T2 | Welding performance | Life | Comprehensive |
| No. | (mm) | (mm) | | | | |
| 2-1 | 0.10 | 0.10 | 1.0 | ⊚ | × | × |
| 2-2 | 0.15 | 0.10 | 1.5 | ⊚ | ○ | ○ |
| 2-3 | 0.25 | 0.10 | 2.5 | ⊚ | ⊚ | ⊚ |
| 2-4 | 0.30 | 0.10 | 3.0 | ⊚ | ⊚ | ⊚ |
| 2-5 | 0.50 | 0.10 | 5.0 | ⊚ | ⊚ | ⊚ |
| 2-6 | 0.65 | 0.10 | 6.5 | ○ | ⊚ | ○ |
| 2-7 | 0.70 | 0.10 | 7.0 | × | ⊚ | × |

The following was confirmed from the results.

In the bipolar lead-acid storage batteries of No. 1-1 to No. 1-7 and No. 2-1 to No. 2-7 in which a thickness (T2) of the negative electrode current collector plate 112a is 0.10 mm, the bipolar lead-acid storage batteries of No. 1-2 to No. 1-6 and No. 2-2 to No. 2-6 in which a ratio (T1/T2) is 1.5 or more and 6.5 or less (that is, a thickness (T1) of the positive electrode current collector plate 111a ranges from 0.15 mm to 0.65 mm) have both welding performance and life performance of O (excellent) or o (good), and the comprehensive evaluation is ⊙ (excellent) or o (good).

Among the bipolar lead-acid storage batteries of No. 1-2 to No. 1-6 and No. 2-2 to No. 2-6, the bipolar lead-acid storage batteries of No. 1-3 to No. 1-5 and No. 2-3 to No. 2-5 having a ratio (T1/T2) of 2.5 or more and 5.0 or less (that is, a thickness (T1) of the positive electrode current collector plate 111a ranges from 0.25 mm to 0.50 mm) are excellent in both welding performance and life performance.

In the bipolar lead-acid storage batteries of Nos. 1-4, 1-8 to 1-10, a thickness (T1) of the positive electrode current collector plate 111a is 0.30 mm or more and 0.75 mm or less, a thickness (T2) of the negative electrode current collector plate 112a is 0.10 mm or more and 0.25 mm or less, a ratio (T1/T2) is 3.0, and both welding performance and life performance are excellent.

### Reference Signs List

- 100: Bipolar lead-acid storage battery
- 110: Cell member
- 111: Positive electrode
- 112: Negative electrode
- 111a: Positive electrode current collector plate
- 111aa: Positive electrode current collector plate
- 111b: Positive active material layer
- 112a: Negative electrode current collector plate
- 112aa: Negative electrode current collector plate
- 112b: Negative active material layer
- 113: Separator
- 120: Biplate
- 121: Biplate substrate (main substrate)
- 121a: Through hole of substrate
- 121b: First recess of substrate
- 121c: Second recess of substrate
- 122: Frame body of biplate
- 130: First end plate
- 131: Substrate of first end plate
- 132: Frame body of first end plate
- 140: Second end plate
- 141: Substrate of second end plate
- 142: Frame body of second end plate
- 150: Adhesive layer
- 160: Electrical conductor
- C: Cell (space housing cell member)

## Claims

1. A bipolar lead-acid storage battery comprising:
a plurality of cell members disposed in a stack manner with intervals including a positive electrode in which a positive active material layer is disposed on one surface of a positive electrode current collector plate formed of lead or a lead alloy, a negative electrode in which a negative active material layer is disposed on one surface of a negative electrode current collector plate formed of lead or a lead alloy, and a separator interposed between the positive electrode and the negative electrode; and
a plurality of space forming members that each form a plurality of spaces to individually house the plurality of cell members,
wherein the space forming members each include a substrate that covers at least one of a side of the positive electrode and a side of the negative electrode of the cell member, and a frame body that surrounds a side surface of the cell member,
the cell member and the substrate of the space forming member are disposed to be alternately stacked,
the frame bodies adjacent to each other are joined to each other,
a main substrate that is the substrate disposed between the cell members adjacent to each other has a through hole extending in a direction intersecting with a plate surface, and the positive electrode current collector plate and the negative electrode current collector plate of the cell members adjacent to each other are electrically connected to each other by an electrical conductor disposed in the through hole, and the plurality of cell members are electrically connected in series,
a thickness (T1) of the positive electrode current collector plate disposed on one surface of the main substrate ranges from 0.15 mm to 0.75 mm, and
a ratio (T1/T2) of the thickness (T1) of the positive electrode current collector plate relative to the thickness (T2) of the negative electrode current collector plate disposed on another face of the main substrate ranges from 1.5 to 6.5.

2. The bipolar lead-acid storage battery according to claim 1, wherein the ratio (T1/T2) ranges from 2.5 to 5.0.

3. The bipolar lead-acid storage battery according to claim 1 or 2, wherein the thickness (T2) of the negative electrode current collector plate ranges from 0.05 mm to 0.25 mm.
